# EUROPEAN PATENT APPLICATION

(11) **EP 4 790 584 A1**
(43) Date of publication of application: **12.08.2026**
(21) Application number: 24894163.5
(22) Date of filing: 20.11.2024
(51) Int. Cl.: G06F 30/20, A43D 1/02, G06F 30/10

(54) **DESIGN ASSISTANCE DEVICE, DESIGN ASSISTANCE METHOD, PROGRAM, AND STORAGE MEDIUM FOR STORING PROGRAM**

(30) Priority: 24.11.2023 JP 2023199194
(71) Applicant: ASICS Corporation, Kobe-shi, Hyogo 650-0021 (JP)
(72) Inventor: KOZUKA, Yuya, Kobe-shi, Hyogo 650-0021 (JP); HATANO, Genki, Kobe-shi, Hyogo 650-0021 (JP)
(74) Representative: TBK
(86) International application number: PCT/JP2024/041096
(87) International publication number: WO 2025/110172

(57) **Abstract**

Footwear having fit that is satisfactory to a user is provided. A design assist apparatus (1) includes: an input unit that receives, from a plurality of users, level data (10) of fit evaluated by each user for each region and pressure data (20) indicative of pressure applied to a foot for each region when footwear (40) is worn; a calculation unit that generates a relationship between a level of fit and pressure applied to a foot at the level as a prediction formula (30) for each region, based on the level data (10) and the pressure data (20) received from the plurality of users; a storage unit that stores the prediction formula (30) generated by the calculation unit; and an output unit that outputs pressure data (20) indicative of pressure applied to a foot. The calculation unit, when the input unit newly receives a level of fit from a user, determines pressure data (20) indicative of pressure applied to a foot in a region of footwear (40) from the received level of fit of the region, based on the prediction formula (30).

## Description

### TECHNICAL FIELD

The present disclosure relates to a design assist apparatus, a design assist method, and a program, a storage medium storing the program.

### BACKGROUND ART

Various efforts are being made to provide footwear having a fit that suits a user's preference. For example, in Japanese National Patent Publication No. 2022-550301 (PTL 1), to increase the fit of footwear, a custom sole is designed to match the shape of a foot using personalized parameter values.

### CITATION LIST

### PATENT LITERATURE

PTL 1: Japanese National Patent Publication No. 2022-550301

### SUMMARY OF INVENTION

### TECHNICAL PROBLEM

However, when providing footwear having a fit that suits a user's preference, the level of fit set by the user is a user's subjective evaluation, such as "tight" or "loose." Therefore, even if footwear having a fit such as "tight" or "loose" is produced based on a standard determined by a manufacturer, it can be deviated from the user's subjective evaluation, and it is difficult to provide footwear having a fit that is satisfactory to the user.

The present disclosure is made to solve such a problem, and an object of the present disclosure is to provide a design assist apparatus, a design assist method, and a program, a storage medium storing the program that can provide footwear having a fit that is satisfactory to a user.

### SOLUTION TO PROBLEM

A design assist apparatus according to a certain aspect of the present disclosure is a design assist apparatus for designing footwear having a user's preferred fit. A preferred fit can be set for at least one region of footwear from a plurality of levels. the design assist apparatus includes: an input unit that receives, from a plurality of users, level data of fit evaluated by each user for each region and pressure data indicative of pressure applied to a foot for each region when the footwear is worn; a calculation unit that generates a relationship between a level of fit and pressure applied to a foot at the level as a prediction formula for each region, based on the level data and the pressure data received from the plurality of users; a storage unit that stores the prediction formula generated by the calculation unit; and an output unit that outputs pressure data indicative of pressure applied to a foot. The calculation unit, when the input unit newly receives a level of fit from a user, determines pressure data indicative of pressure applied to a foot in a region of footwear from the received level of fit of the region, based on the prediction formula.

A design assist method according to a certain aspect of the present disclosure is a design assist method for designing footwear having a user's preferred fit. A preferred fit can be set for at least one region of footwear from a plurality of levels. The design assist method includes: receiving, from a plurality of users, level data including a level of fit set for each region and pressure data indicative of pressure applied to a foot for each region when footwear having a level of fit set for each region is worn; generating a relationship between a set level of fit and pressure applied to a foot at the level as a prediction formula for each region, based on the level data and the pressure data received from the plurality of users; storing the generated prediction formula; determining, when newly receiving a level of fit from a user, pressure data indicative of pressure applied to a foot in a region of footwear from the received level of fit of the region, based on the prediction formula; and outputting determined pressure data indicative of pressure applied to a foot.

A program according to a certain aspect of the present disclosure is a program, executed by a computer, for designing footwear having a user's preferred fit. A preferred fit can be set for at least one region of footwear from a plurality of levels. The computer is caused to implement: an input unit that receives, from a plurality of users, level data including a level of fit set for each region and pressure data indicative of pressure applied to a foot for each region when footwear having a level of fit set for each region is worn; a calculation unit that generates a relationship between a set level of fit and pressure applied to a foot at the level as a prediction formula for each region, based on the level data and the pressure data received from the plurality of users and stores the generated prediction formula into a storage unit; and an output unit that, when the input unit newly receives a level of fit from a user, outputs pressure data indicative of pressure applied to a foot in a region of footwear determined by the calculation unit from the received level of fit of the region, based on the prediction formula.

### ADVANTAGEOUS EFFECTS OF INVENTION

According to the present disclosure, since the pressure applied to the foot in the set region of footwear is determined from the level of fit of the region based on the prediction formula, footwear having a fit that is satisfactory to the user can be designed or proposed.

### BRIEF DESCRIPTION OF DRAWINGS

Fig. 1 is a schematic diagram illustrating design of footwear including a design assist apparatus according to an embodiment.
Fig. 2 is a block diagram illustrating a configuration of the design assist apparatus according to the embodiment.
Fig. 3 is a flowchart illustrating a prediction process performed by the design assist apparatus according to the embodiment.
Fig. 4 is a diagram illustrating regions for which fit of footwear can be set.
Fig. 5 is a diagram for illustrating a method of determining pressure data indicative of pressure applied to a foot for each region when footwear is worn.
Fig. 6 is a diagram for illustrating a method of measuring the pressure applied to a foot for each region when footwear is worn.
Fig. 7 is a diagram for illustrating an example of a method in which a user evaluates fit of footwear and inputs level data.
Fig. 8 is a schematic diagram for illustrating correction of a prediction formula in the design assist apparatus according to the embodiment.
Fig. 9 is a schematic diagram for illustrating adjustment of the prediction formula in the design assist apparatus according to the embodiment.
Fig. 10 is a flowchart for adjusting the prediction formula in the design assist apparatus according to the embodiment.
Fig. 11 is a diagram for illustrating an example of adjusting the prediction formula based on usage data and application data.
Fig. 12 is a diagram for illustrating an example of adjusting the prediction formula based on safety standards.

### DESCRIPTION OF EMBODIMENTS

Hereinafter, embodiments according to a design assist apparatus and a design assist method will be described with reference to the accompanying drawings. In the following description, the same configurations are denoted by the same reference signs. Their names and functions are also the same. Accordingly, detailed description thereof will not be repeated. Note that, in the following description, an example will be described in which design of footwear worn by a user is assisted in the design assist apparatus and the design assist method. The footwear to be designed is not limited to shoes illustrated in the drawings and may be sandals or the like, and the design assist described below can be similarly applied to footwear other than shoes. In addition, designing footwear having a user's preferred fit in the design assist apparatus and the design assist method according to the present disclosure includes not only designing the shape of the footwear but also proposing existing footwear corresponding to the shape to be designed.

### [Design of Footwear]

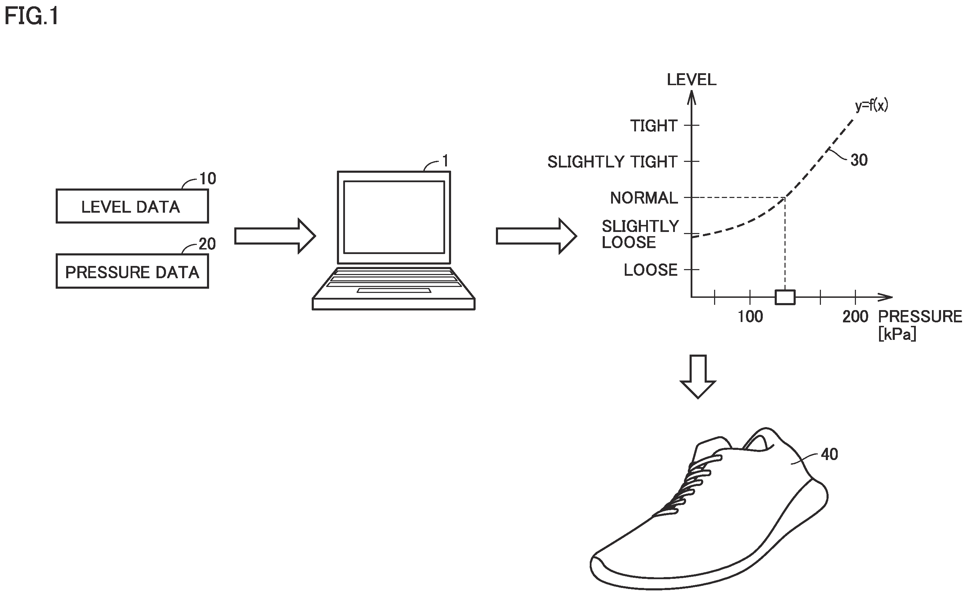

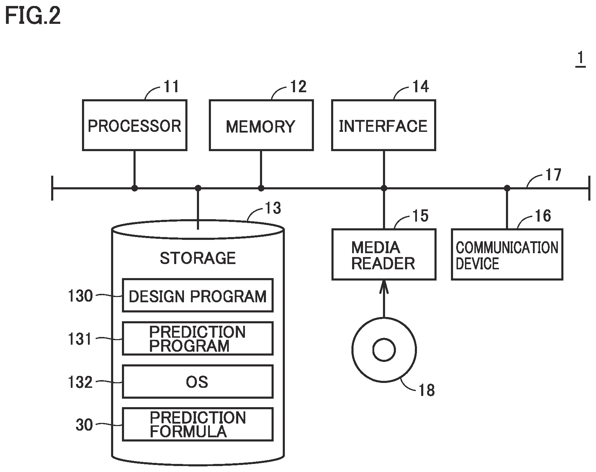

Fig. 1 is a schematic diagram illustrating design of footwear including a design assist apparatus according to an embodiment. Fig. 2 is a block diagram illustrating a configuration of a design assist apparatus 1 according to the embodiment. When designing fit of footwear 40, design matching a level of the user's preferred fit is desired. In particular, when footwear 40 is produced by custom-making in accordance with the shape of an individual's foot, design considering the level of the user's preferred fit is performed to produce footwear 40.

Specifically, regarding the level of the user's preferred fit, the user sets a preferred level from among five levels of loose, slightly loose, normal, slightly tight, and tight, and design assist apparatus 1 designs footwear 40 having the user's preferred fit. However, in conventional footwear design, the design has been simple, such as, for example, designing footwear having normal fit exactly as a foot shape, designing footwear to be 5% larger than the foot shape for footwear having slightly loose fit, and designing footwear to be 5% smaller than the foot shape for footwear having slightly tight fit. Therefore, it has been difficult to design footwear having a fit that is satisfactory to the user. Meanwhile, a method is also conceivable in which footwear is prototyped while confirming the fit with the user, and work is repeated until footwear having a fit that is satisfactory to the user can be designed. The work is, however, complicated and costly.

Hence, design assist apparatus 1 generates a relationship between level data 10 of fit evaluated by the user and pressure data 20 applied to a foot when the user wears footwear 40 as a prediction formula 30, so that the level of fit subjectively evaluated by the user can be converted into an objective numerical value. Specifically, one method of generating prediction formula 30 is as follows, for example:
1. Collect necessary data (e.g., level data 10 and pressure data 20).
2. Analyze the collected data and select an appropriate known mathematical model.
3. Estimate parameters for prediction formula 30, based on the selected mathematical model.
4. Determine prediction formula 30 using the estimated parameters.

This allows design assist apparatus 1, when it newly receives a level of fit from the user, to determine pressure data 20 indicative of pressure applied to a foot in the footwear from the received level of fit, based on prediction formula 30, and design footwear having a fit that is satisfactory to the user, based on an objective numerical value.

In particular, design assist apparatus 1 generates, as prediction formula 30, the relationship between level data 10 of fit evaluated by multiple users and pressure data 20 applied to the foot at the level, thereby generating prediction formula 30 that can be utilized for a large number of users. This allows, by using prediction formula 30 for the design of footwear 40, designing footwear 40 having a fit that is satisfactory to many users. Furthermore, prediction formula 30 may be determined for each piece of attribute information of the users. The attribute information of the users includes gender, physical information (body shape, foot shape, etc.), athletic ability (professional athlete, amateur athlete, daily activity level, etc.), running style (overpronation, neutral pronation, etc.), and the like.

A preferred fit can also be set for multiple regions of footwear 40 from multiple levels, as described below. When a preferred fit can be set for multiple regions of footwear 40, design assist apparatus 1 can generate, as prediction formula 30 for each region, the relationship between level data 10 of fit evaluated by a user for each region and pressure data 20 applied to the foot at the level. This allows design assist apparatus 1 to use prediction formula 30 for each region to design footwear 40 having a fit that is more satisfactory to the user.

In the present disclosure, design assist apparatus 1 generates design data for producing footwear 40. However, this is by way of example, and the pressure applied to the foot determined by design assist apparatus 1 may be output to another design apparatus, and the other design apparatus may create design data for producing footwear 40.

Design assist apparatus 1 receives, from multiple users, level data 10 including a level of fit set for each region and pressure data 20 indicative of pressure applied to a foot for each region when wearing footwear 40 in which the level of fit is set for each region. Design assist apparatus 1 generates a relationship between the set level of fit and the pressure applied to the foot at the level as a prediction formula 30 for each region. Specifically, from prediction formula 30 shown in Fig. 1, it can be seen that if the level of fit is "normal," the pressure applied to the foot (e.g., fitting pressure) is 120 kPa. Therefore, design assist apparatus 1 can design footwear 40 having "normal" fit that is satisfactory to the user by designing if so that the pressure applied to the foot becomes 120 kPa.

### [Configuration of Design Assist Apparatus]

Next, a hardware configuration of design assist apparatus 1 is specifically described. As shown in Fig. 2, design assist apparatus 1 includes a processor 11, a memory 12, a storage 13, an interface 14, a media reader 15, and a communication device 16, which are connected via a processor bus 17.

Processor 11 is an example of a "calculation unit." Processor 11 is a computer that reads programs (e.g., a design program 130, a prediction program 131, and an OS (Operating System) 132) stored in storage 13, and loads the read programs for execution on memory 12. Processor 11 includes, for example, a CPU (Central Processing Unit), an FPGA (Field Programmable Gate Array), a GPU (Graphics Processing Unit), or an MPU (Multi Processing Unit). Note that processor 11 may be configured with processing circuitry.

Memory 12 includes a volatile memory such as a DRAM (Dynamic Random Access Memory) or an SRAM (Static Random Access Memory), or a nonvolatile memory such as a ROM (Read Only Memory) or a flash memory.

Storage 13 is an example of a "storage unit." For example, storage 13 is configured of a nonvolatile storage device such as an HDD (Hard Disk Drive) or an SSD (Solid State Drive). Storage 13 stores data such as prediction formula 30, in addition to programs such as design program 130, prediction program 131, and OS 132.

Design program 130 is a program for executing a design processing of designing footwear 40 based on foot shape data and a level of a user's preferred fit.

Prediction program 131 is a program for executing a prediction process of generating prediction formula 30 based on level data 10 including a level of fit set for each region and pressure data 20 indicative of pressure applied to a foot for each region when footwear 40 in which a level of fit is set for each region is worn.

Prediction formula 30 generates a relationship between a level of fit and pressure applied to the foot at the level for each region by prediction program 131. Note that the regions of footwear 40 will be described in detail below. Moreover, prediction formula 30 may be adjusted for each user and stored in storage 13 as a user's prediction formula, as described below.

Interface 14 is an example of an "input unit" or an "output unit." Interface 14 receives an input by a user of design assist apparatus 1, and is configured of a keyboard, a mouse, and a touch device.

Media reader 15 accepts a storage medium 18 such as a removable disk and acquires data stored in storage medium 18. Storage medium 18 such as a removable disk may store programs such as design program 130 and prediction program 131.

Communication device 16 is an example of an "input unit" or an "output unit." Communication device 16 transmits and receives data to and from other apparatuses by performing wired or wireless communications. For example, communication device 16 can receive level data 10 and pressure data 20 from another apparatus by communicating with the other apparatus. Moreover, communication device 16 can transmit the determined pressure applied to the foot to another design apparatus by communicating with the other design apparatus. Furthermore, communication device 16 may be used to download design program 130 and prediction program 131 to storage 13.

Note that design assist apparatus 1 is not necessarily limited to receiving level data 10 and pressure data 20 by communication device 16. For example, design assist apparatus 1 may use interface 14 to receive level data 10 and pressure data 20 entered by a user. Alternatively, design assist apparatus 1 may read level data 10 and pressure data 20 stored in storage medium 18 by media reader 15.

### [Prediction Process]

If footwear 40 is designed by custom-making with design assist apparatus 1 or footwear 40 having fit matching preference is proposed from among commercially available footwear, a level of fit is newly selected from among five levels by the user and input to design assist apparatus 1. Design assist apparatus 1 determines pressure of footwear 40 applied to the foot from the received level of fit, based on prediction formula 30. Design assist apparatus 1 performs design of footwear 40 that can achieve the determined pressure applied to the foot. Alternatively, design assist apparatus 1 proposes footwear 40 that is close to the pressure applied to the foot determined from among commercially available footwear.

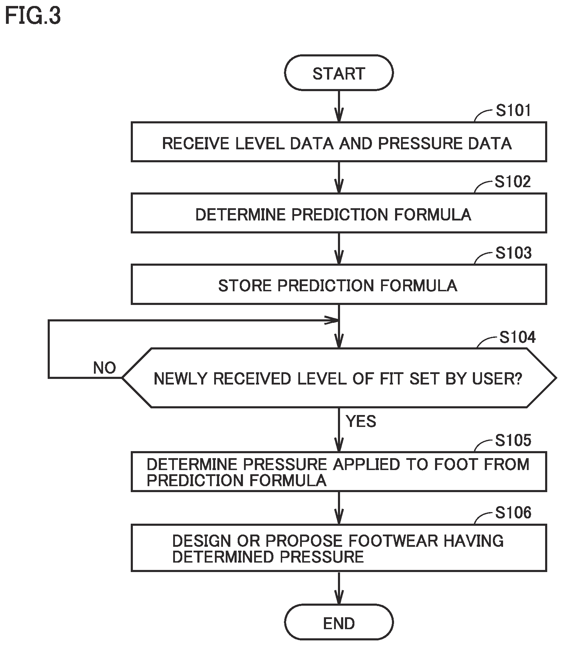

Design assist apparatus 1 first needs to generate prediction formula 30 before determining the pressure of footwear 40 applied to the foot. In design assist apparatus 1, the prediction process including a process of generating prediction formula 30 is executed. Fig. 3 is a flowchart illustrating the prediction process performed by design assist apparatus 1 according to the embodiment. Note that the prediction process is implemented by processor 11 of design assist apparatus 1 executing prediction program 131.

As shown in Fig. 3, design assist apparatus 1 receives, from multiple users, level data 10 of fit evaluated by the users for each region and pressure data 20 indicative of pressure applied to a foot for each region when wearing footwear 40 (step S101). Initially, preferred fit for at least one region of footwear 40 can be set from multiple levels. Note that the flowchart shown in Fig. 3 may be used by limiting to a certain region of footwear 40 or may be used for the entire footwear 40. If the flowchart is limited to a certain region of footwear 40, it may be used only for a region that the user desires to adjust for personalized footwear 40. Moreover, it is contemplated that, for example, footwear 40 reinforced in a certain region is recommended based on the application of footwear 40, (e.g., for skateboarding footwear 40, footwear 40 provided with a reinforcement region on the lateral foot side is recommended).

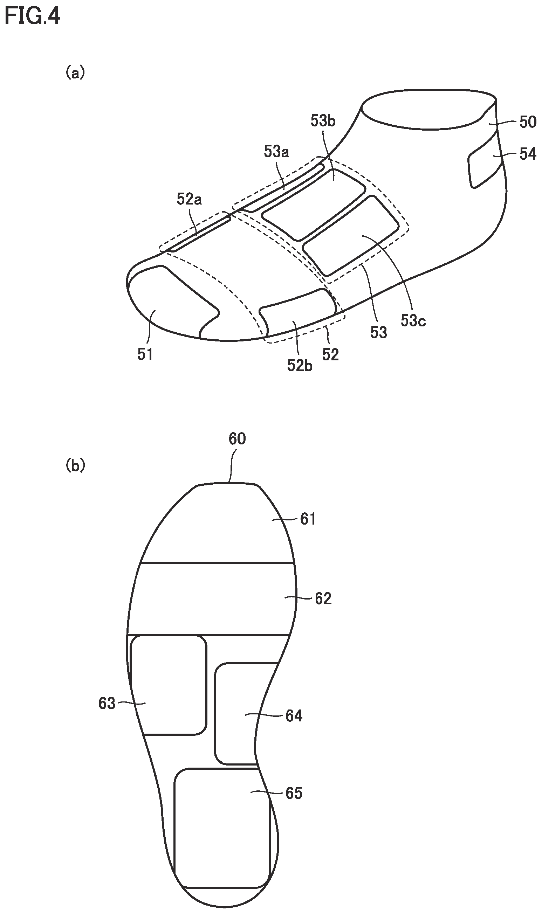

Regions of footwear 40 are now described specifically when footwear 40 is a shoe including an upper and a sole, as an example. Fig. 4 is a diagram illustrating regions for which fit of footwear 40 can be set. Part (a) of Fig. 4 shows an upper 50 constituting footwear 40. Upper 50 can be broadly divided into four: a toe region 51, an MP (Metatarso Phalangeal) region 52, an instep region 53, and a heel region 54, as shown in (a) of Fig. 4. For regions on the upper 50 side, design assist apparatus 1 at least sets a level of fit for at least one of toe region 51, MP region 52, instep region 53, and heel region 54, determines pressure applied to the region, and receives an evaluation of the user's fit for the region.

Note that the regions shown in (a) of Fig. 4 are those whose shapes differ significantly depending on individuals, and are those where large deformation or force is applied during running, and thus are regions where fit is particularly a key focus. For example, toe region 51 is a region where only specific toes receive excessive pressure even with the same foot length, as toe shapes are classified into the Egyptian type (the thumb is long), the Greek type (the second toe is long), the square type (all toes are about the same length), etc., depending on the length of toes. MP region 52 is a region where MP joints are located, is the most protruding part in a foot width direction, and has a small radius of curvature too. Thus, MP region 52 is a region where pressure is locally easily felt. In instep region 53, ridgeline portion 53b is specifically a ridgeline of an instep of the foot, and since height and position of the ridgeline differ greatly among individuals, it is a region where pressure is locally easily felt when the height of the ridgeline is high, the inclination of the ridgeline is steep, etc. Heel region 54 is a region where fit needs to be evaluated because pressure on the Achilles tendon causes shoe soreness, and the absence of pressure on an upper part of the malleolus can affect the ease of slipping off during walking or running.

MP region 52 can be further divided into a medial foot side MP region 52a and a lateral foot side MP region 52b. The medial foot side MP region 52a is a region on the thumb side and has a small radius of curvature. The lateral foot side MP region 52b is a little toe side portion and has a small radius of curvature. Instep region 53 can be divided into a medial foot side instep region 53a, a ridgeline portion 53b, and a lateral foot side instep region 53c. The medial foot side instep region 53a corresponds to an arch portion of the foot. Ridgeline portion 53b is a portion of the instep of the foot where the height from the sole of the foot is high. Heel region 54 is a region corresponding to the position of the upper part of the calcaneus or the Achilles tendon.

Part (b) of Fig. 4 shows a sole 60 constituting footwear 40. Sole 60 can be broadly divided into four: a toe region 61, an area 62 immediately below the MP, a lateral region 63 of the midfoot portion, an arch region 64, and an area 65 immediately below the heel, as illustrated in (b) of Fig. 4. Design assist apparatus 1 sets a level of fit for at least one region on the sole 60 side among, at least, toe region 61, area 62 immediately below the MP, lateral region 63 of the midfoot portion, arch region 64, and area 65 immediately below the heel, determines pressure applied to the region, and receives an evaluation of the user's fit for the region. Note that the regions illustrated in (b) of Fig. 4 are those whose shapes differ significantly depending on individuals, and are those where large deformation or force is applied during running, and thus are regions where fit is particularly a key focus. For example, toe region 61 is a region that has a portion in contact with a thumb where excessive pressure occurs depending on running style. Area 62 immediately below the MP is a region where MP joints are located, and where pressure increases in a kick-off action in the latter half of a landing phase. Further, area 62 immediately below the MP is a region where pressure design is important because if pressure is biased to the medial foot side or the lateral side, the foot will be excessively deformed such as pronation. Arch region 64 is a medial foot side region of the midfoot portion and where pressure design according to user's preference is required because contact area and contact portion differ depending on an arch height of the user. Area 65 immediately below the heel is a region where the magnitude of pressure applied to the foot differs depending on a strike angle such as heel strike or flat strike, and for example, the pressure increases for the user with heel strike and the pressure decreases for the user with flat strike.

The user can set or evaluate preferred levels of fit for the multiple regions shown in (a) and (b) of Fig. 4. Design assist apparatus 1 can receive level data 10 including levels of fit evaluated by the user for each of the regions shown in (a) and (b) of Fig. 4.

Pressure data 20 includes values obtained by determining the pressure applied to the foot for each of the regions shown in (a) and (b) of Fig. 4 when footwear 40 is worn. Specifically, a method of determining the pressure applied to the foot for each region when footwear 40 is worn is now described. First, distributions of pressure applied to the foot include a fitting pressure distribution on the upper 50 side and a foot pressure distribution on the sole 60 side. Each pressure distribution can be determined by either calculated by simulation or measured by a sensor.

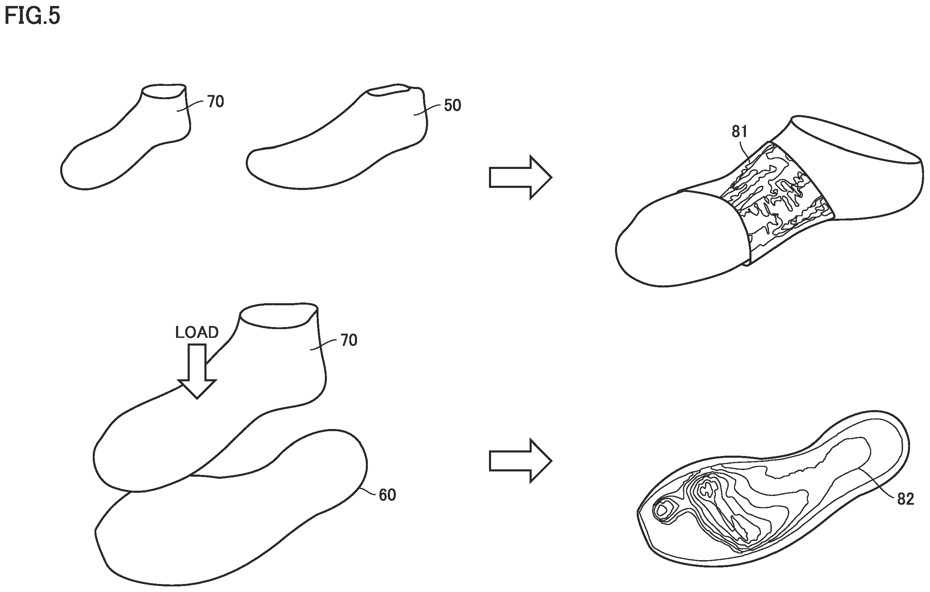

First, the method of determining a distribution of pressure applied to the foot by simulation is now described. In the following description, the distribution of pressure applied to the foot is determined with design assist apparatus 1 and is passed as pressure data 20 to the input unit, thereby allowing design assist apparatus 1 to receive pressure data 20. The distribution of the pressure applied to the foot may be determined by an apparatus other than design assist apparatus 1. Design assist apparatus 1 determines fitting pressure distribution 81 on the upper 50 side from foot shape data 70 of the user and last data of upper 50 using a finite element method (FEM). Fig. 5 is a diagram for illustrating a method of determining pressure applied to the foot for each region when footwear 40 is worn. Fitting pressure distribution 81 displays pressure data 20 indicative of pressure applied to a foot in MP region 52 as contour lines, as shown in Fig. 5. Design assist apparatus 1 determines pressure applied to the foot in MP region 52 as pressure data 20 from fitting pressure distribution 81. Note that the fitting pressure distribution 81 shown in Fig. 5 is an example, and other regions can be similarly determined.

When determining fitting pressure distribution 81 on the upper 50 side, user's foot shape data 70 and last data of upper 50 are essential data. Note that, instead of foot shape data 70, data obtained by predicting a foot shape based on results of a questionnaire regarding footwear worn in the past may be used as foot shape data. Moreover, instead of the last data of upper 50, internal scan data of footwear 40 may be used as last data. Preferably, information such as material information of upper 50, past measurement data, information on lace tightening degree, wearing degree, and shape and material information of sole 60 are added to determine more accurate fitting pressure distribution 81 by the finite element method. Note that the wearing degree is evaluated based on answers to questions to the user, such as, for example, whether the user re-tightens laces every time when running or whether the user is unable to take off the shoes without untying laces when taking off. One method of determining the distribution of pressure applied to the foot by a method other than finite elements is using machine learning. Specifically, using AI technology such as a neural network, and, for example, finite element analysis or fitting pressure measurement data is used as learning data, a surrogate model for predicting pressure distribution from the learning data is utilized.

Besides the finite element method, one method of determining the fitting pressure distribution on the upper 50 side is a simple method using cross-sectional line lengths of foot shape data 70 and last data of upper 50. In the simple method, for example, a cross-sectional line length in MP region 52 of foot shape data 70 and a cross-sectional line length in MP region 52 of the last data of upper 50 are respectively determined. Specifically, if a cross-sectional line length L1 of upper 50 is 219 mm and a cross-sectional line length L2 of foot shape data 70 is 221 mm, a difference ΔL in cross-sectional line length can be determined as ΔL = L2 - L1 = 2 mm. Design assist apparatus 1 determines tension generated in upper 50 based on difference ΔL in cross-sectional line length and an elastic modulus E of upper 50. Further, design assist apparatus 1 determines pressure applied to the foot in a cross section of upper 50 from the determined tension, using a prediction formula such as, for example, Hoop stress.

Next, design assist apparatus 1 adds a condition in which a load is applied to shape data of sole 60 to user's foot shape data 70, and determines foot pressure distribution 82 on the sole 60 side using the finite element method. Note that, as information for determining foot pressure distribution 82 on the sole 60 side by applying a load, at least the shape of a sole or an insole, material information, foot shape, and information on weight may be included. Further, to increase accuracy of determining foot pressure distribution 82, information on running style such as strike angle or pronation angle may be added. Foot pressure distribution 82 displays the pressure applied to the foot (sole of the foot) as contour lines, as shown in Fig. 5. Design assist apparatus 1 determines the pressure applied to the foot on the sole 60 side as pressure data 20 from foot pressure distribution 82.

User's foot shape data 70 and shape data of sole 60 are essential data to determine foot pressure distribution 82 on the sole 60 side. Preferably, information such as the material information of sole 60, past measurement data, shape and material information of a sockliner, user's running style information, user's motion information performed for the user (e.g., information on motion analysis (behavior other than foot, center-of-gravity movement speed, etc.)), are added to determine more accurate foot pressure distribution 82 by the finite element method. Note that the user's running style information is, for example, information on strike angle during running.

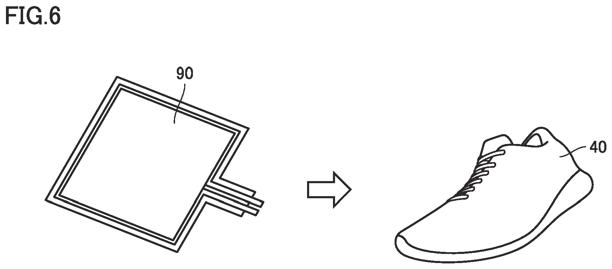

There is also a method of directly measuring the fitting pressure distribution on the upper 50 side and the foot pressure distribution on the sole 60 side, using a sensor, other than by simulation. Fig. 6 is a diagram for illustrating a method of measuring the pressure applied to the foot for each region when footwear 40 is worn. Film-type pressure sensors 90, as shown in Fig. 6, are respectively disposed between the foot and upper 50 and between the foot and upper 50, and fitting pressure distribution on the upper 50 side and foot pressure distribution on the sole 60 side are measured by pressure sensors 90. Design assist apparatus 1 determines pressure data 20 from the fitting pressure distribution on the upper 50 side and the foot pressure distribution on the sole 60 side measured by pressure sensors 90 and receives pressure data 20 at the input unit.

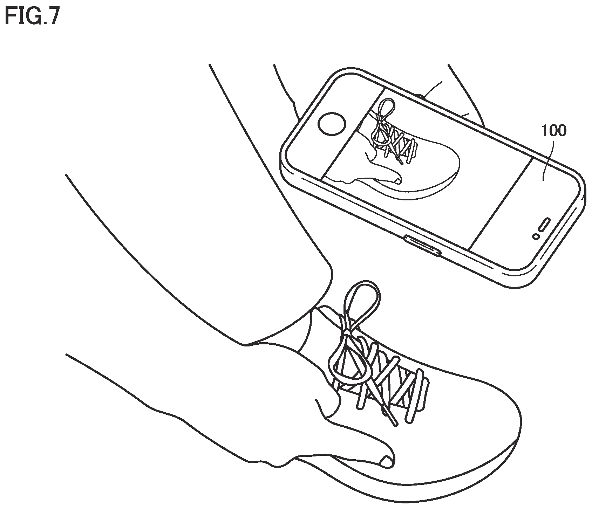

Next, input of a level of fit is described. Fig. 7 is a diagram for illustrating an example of a method in which the user evaluates fit of footwear 40 and enters level data 10. As shown in Fig. 7, the user wears footwear 40 and obtains image data (a video) by capturing with a smartphone 100 a video of himself/herself pointing to a region for evaluating fit and explaining aloud level information of fit for the pointed region (e.g., "slightly tight"). Design assist apparatus 1 receives the captured image data as level data 10 at the input unit. The user can easily enter level data 10 to design assist apparatus 1 simply by speaking the level information of the fit evaluated by him/her while wearing footwear 40 and pointing to a region. When the image data of level data 10 is received by design assist apparatus 1, design assist apparatus 1 converts it into level information of fit evaluated by the user for each region using, for example, AI technology and voice recognition technology.

The method of entry of level data 10 is not limited to the method described with respect to Fig. 7, and a level of fit evaluated by the user for each region may be written down in a questionnaire form or a level of fit evaluated by the user for each region may be entered in a web-type input form.

As described above, specifically and explicitly indicating level data 10 of the user for a region desired to be evaluated or improved increases the accuracy of the prediction formula previously prepared, thereby improving design/proposal data for a specific user so as to provide footwear that more meets user's demand.

Returning to Fig. 3, design assist apparatus 1 generates a relationship between a level of fit and pressure applied to the foot at the level as prediction formula 30 for each region based on level data 10 and pressure data 20 received from multiple users (step S102). Design assist apparatus 1 uses regression analysis to generate prediction formula 30 (function) having the level of fit as an explanatory variable and the pressure applied to the foot as an objective variable. Design assist apparatus 1 stores the generated prediction formula 30 into storage 13 (step S103). Prediction formula 30, determined from level data 10 and pressure data 20 collected from the users, represents a relationship between a standard level of fit and the pressure applied to the foot. The use of this standard prediction formula 30 enables providing footwear 40 having fit that is satisfactory to many users. To generate the standard prediction formula 30, for example, many users having standard foot shapes are asked to wear footwear 40 and level information of fit is interviewed. Thereafter, the standard prediction formula 30 may be updated every time the level information of fit is acquired from a user who wears footwear 40.

Design assist apparatus 1 determines whether the input unit has newly received a level of fit from a user (step S104). If the input unit has not newly received a level of fit from a user (NO in step S104), design assist apparatus 1 returns the process to step S 104 and waits until a level of fit is newly input from a user.

If the input unit has newly received a level of fit from a user (YES in step S104), on the other hand, design assist apparatus 1 determines pressure applied to the foot in a region of footwear 40 from the received level of fit of the region, based on prediction formula 30 (step S105). Design assist apparatus 1 can design or propose footwear 40 having fit that is satisfactory to the user, based on the determined pressure applied to the foot (step S106).

### [Correction of Prediction Formula]

Prediction formula 30, determined from level data 10 and pressure data 20 collected from multiple users, represents the relationship between the standard level of fit and the pressure applied to the foot. However, there are individual differences in shapes of human feet. Therefore, even if footwear 40 is designed by determining the pressure applied to the foot from prediction formula 30, footwear 40 having fit that is satisfactory to a user may not be designed due to individual differences. Hence, design assist apparatus 1 needs to adjust the prediction formula for the user. In particular, when designing personalized footwear 40, a prediction formula specialized for a user is required.

Further, there is a difference between preferred fit subjectively recognized by a user and fit the user actually feels by wearing footwear 40. Therefore, even if footwear 40 is designed by determining the pressure applied to the foot from prediction formula 30 based on a level of fit set by the user, footwear 40 having fit that is satisfactory to the user may not be designed due to the difference. Hence, design assist apparatus 1 needs to consider the difference to adjust the prediction formula.

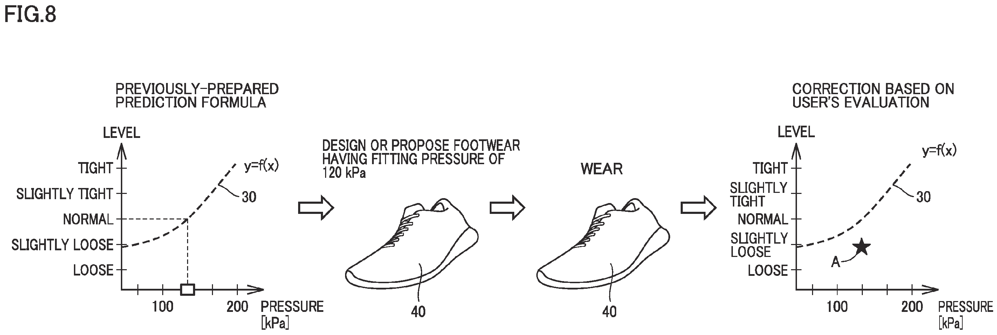

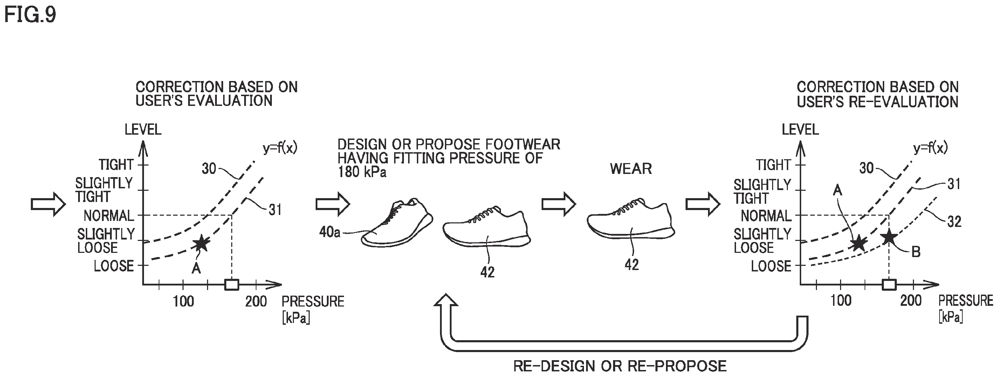

Specifically, adjustment of the prediction formula is now described. Note that, in the following, for ease of explanation, assumed that, simply, a level of fit of footwear 40 is set and the fitting pressure of footwear 40 is determined, instead of setting a level of fit for each region of footwear 40 and determining fitting pressure for each region. Figs. 8 and 9 are schematic diagrams for illustrating adjustment of prediction formula 30 in design assist apparatus 1 according to the embodiment. Note that while an example is described in Figs. 8 and 9 in which the prediction formula 30 is used to determine fitting pressure from a level of fit, prediction formula 30 can be similarly used to determine foot pressure from a level of fit. In that case, fitting pressure may be read as foot pressure. First, using previously-prepared prediction formula 30, design assist apparatus 1 determines fitting pressure for a level of fit (e.g., "normal") set by the user, as shown in Fig. 8. If the determined fitting pressure is 120 kPa, design assist apparatus 1 designs footwear 40 having fitting pressure of 120 kPa or proposes commercially available footwear 40 having fitting pressure of 120 kPa.

The user actually wears the designed or proposed footwear 40 and evaluates fit. Evaluation of fit is performed by the user taking, with a smartphone 100, an image of footwear 40 the user is wearing to obtain image data, as described with respect to Fig. 7. Note that taking an image of footwear 40 worn by the user may be performed not by the user but by another person such as a store clerk. Level data (image data) of fit of footwear 40 evaluated by the user is input to design assist apparatus 1.

In the example shown in Fig. 8, the user wears footwear 40 set to have "normal" fit using prediction formula 30 and evaluates fit of footwear 40 as "slightly loose." In other words, since the user wears footwear 40 having fitting pressure of 120 kPa and feels that fit of footwear 40 is "slightly loose," it can be seen that higher fitting pressure is necessary for the user to feel "normal" fit. It can be seen that user's evaluation A deviates from prediction formula 30 shown in Fig. 8.

Hence, design assist apparatus 1 adjusts prediction formula 30 so as to pass through the user's evaluation A and generates a user's prediction formula 31, as shown in Fig. 9. Specifically, design assist apparatus 1 generates the user's prediction formula 31 by moving prediction formula 30 downward so as to pass through the user's evaluation A. When the user's prediction formula 31 is generated, design assist apparatus 1 determines fitting pressure for a level of fit (e.g., "normal") set by the user using prediction formula 31, as shown in Fig. 9. Since design assist apparatus 1 recognizes from prediction formula 31 that the fitting pressure for "normal" fit is 180 kPa, design assist apparatus 1 designs footwear 40 having fitting pressure of 180 kPa or proposes commercially available footwear 40 having fitting pressure of 180 kPa. Specifically, design assist apparatus 1 designs or proposes footwear 40a being of the same type as footwear 40 but with a smaller size, or footwear 42 of a different type from footwear 40.

A case where design assist apparatus 1 specifically recommends footwear 40 is now described. For example, regarding upper 50, if fitting pressure originally desired is tight but fitting pressure of the evaluated footwear is normal, design assist apparatus 1 recommends footwear closest to an ideal pressure distribution from among pressure prediction of footwear one size smaller, pressure prediction of footwear being of the same size but a different last data, pressure prediction of footwear having a different size and a different last data, and pressure prediction of footwear whose girth has been changed. Regarding sole 60, if the midfoot portion pressure is low relative to originally desired foot pressure, design assist apparatus 1 recommends footwear having a high support function. Conversely, if the midfoot portion pressure is high relative to originally desired foot pressure, design assist apparatus 1 recommends footwear having a high cushioning property. If the footwear is personalized shoes (personalized sockliners), design assist apparatus 1 corrects the sole rigidity distribution or uneven shape.

Next, the user actually wears the designed or proposed footwear 42 and re-evaluates fit. Level data of fit of footwear 42 re-evaluated by the user is input to design assist apparatus 1. In the example shown in Fig. 9, the user wears footwear 42 set to have "normal" fit using a prediction formula 31 and re-evaluates fit of footwear 42 as "slightly loose." In other words, since the user wears footwear 40 having fitting pressure of 180 kPa and feels that fit of footwear 40 is "slightly loose," it can be seen that even higher fitting pressure is necessary for the user to feel "normal" fit. It can be seen that the user's re-evaluation B deviates from prediction formula 31 shown in Fig. 9.

Hence, design assist apparatus 1 adjusts prediction formula 31 so as to pass through the user's re-evaluation B and generates a user's prediction formula 32, as shown in Fig. 9. When the user's prediction formula 32 is generated, design assist apparatus 1 uses prediction formula 32 to determine fitting pressure for the level of fit (e.g., "normal") set by the user, as shown in Fig. 9. Design assist apparatus 1 redesigns or re-proposes footwear having the fitting pressure determined using prediction formula 32. Performing the processes shown in Figs. 8 and 9 allows standard prediction formula 30 to be adjusted into user-specialized prediction formulas 31 and 32.

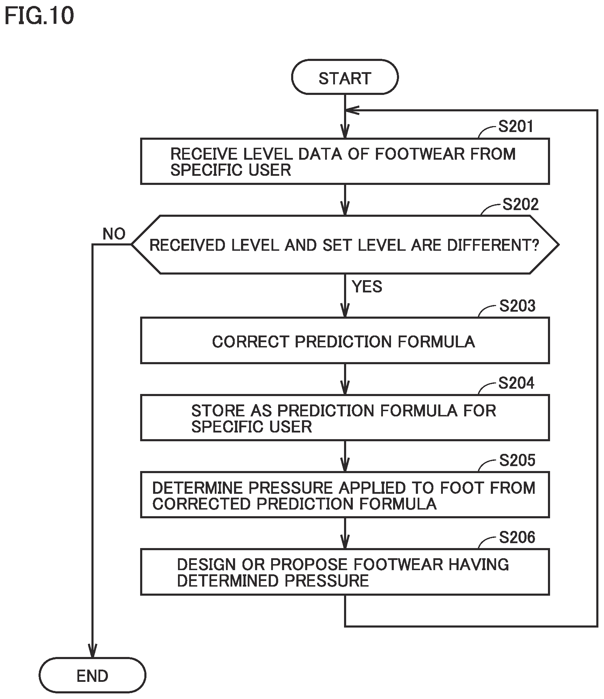

Users who need to have the processes shown in Figs. 8 and 9 performed are specific users such as a user who seeks personalized footwear and a user who desires to purchase footwear more suitable for himself/herself. A method of adjusting the prediction formula by a specific user is now described based on a flowchart. Fig. 10 is a flowchart for adjusting prediction formula 30 in design assist apparatus 1 according to the embodiment. First, footwear 40 having fit (e.g., "normal") set by a specific user is provided based on the flowchart shown in Fig. 3. The specific user evaluates fit of the provided footwear 40. Design assist apparatus 1 receives level data of fit of footwear 40 evaluated by the specific user (S201).

Design assist apparatus 1 determines whether the level of fit of footwear 40 evaluated by the user (received level) and the set level of fit of footwear 40 (set level) are different as shown in Figs. 8 and 9 (step S202). If the received level and the set level are not different (NO in step S202), design assist apparatus 1 ends the process of adjusting prediction formula 30.

If the received level and the set level are different (YES in step S202), design assist apparatus 1 adjusts prediction formula 30 into prediction formulas 31 and 32 passing through the level of fit of footwear 40 evaluated by the user, as shown in Figs. 8 and 9 (step S203).

Design assist apparatus 1 stores prediction formulas 31 and 32 into storage 13, as a specific user's prediction formula (step S204). By using prediction formulas 31 and 32 specialized for the specific user instead of standard prediction formula 30 determined by the flowchart shown in Fig. 3, design assist apparatus 1 can provide footwear 40 having fit that is more satisfactory to the specific user.

Design assist apparatus 1 determines pressure applied to the foot in the region of footwear 40 from the level of fit set by the specific user, based on prediction formulas 31 and 32 (step S205). Design assist apparatus 1 can design or propose footwear 40 having the determined pressure applied to the foot (step S206).

### [Variations]

The above-described design assist apparatus 1 feeds back the user's evaluation of the fit to adjust prediction formula 30, and design or propose footwear 40 having fit that is satisfactory to the user. However, design assist apparatus 1 may adjust prediction formula 30 in consideration of usage data such as a user's use period and frequency of use of footwear 40, and application data of footwear 40 such as soccer and running.

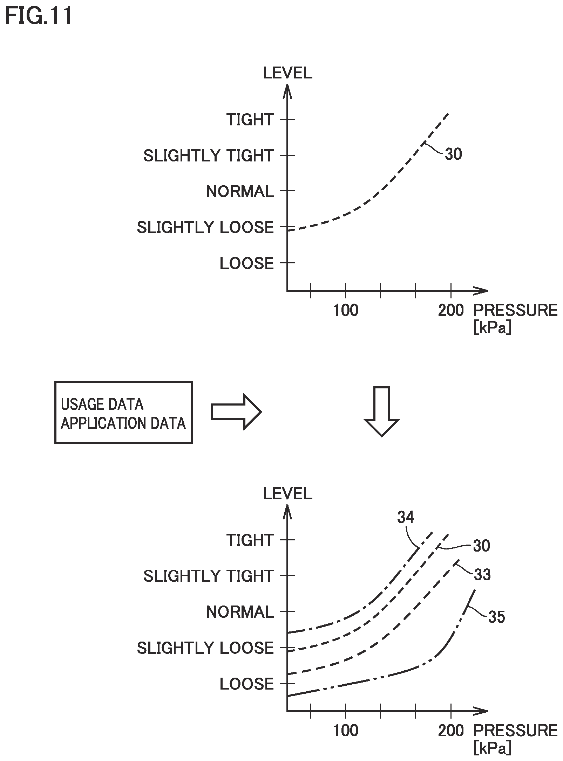

Fig. 11 is a diagram for illustrating an example of adjusting prediction formula 30 based on usage data and application data. For example, if the usage data includes a use period longer than a standard period, it is conceivable that footwear 40 deteriorates over time and less pressure is applied to the foot. Therefore, to maintain the same level of fit in a long use period, preferably, the pressure applied to the foot is slightly increased. When receiving usage data of a use period longer than the standard period, design assist apparatus 1 adjusts prediction formula 30 into prediction formula 33 in which more pressure is applied to the foot than prediction formula 30, as shown in Fig. 11. Moreover, for the use of footwear 40 for a long period, when the toe of upper 50 is reinforced so as not to be broken or the heel of a shoe sole is reinforced so as not to be worn, design assist apparatus 1 may adjust the prediction formula for the region of the reinforced portion so that less pressure is applied to the foot than the standard prediction formula.

Further, for example, if footwear 40 for daily walking is preferred to have loose design, design assist apparatus 1, when it receives application data that it is for daily walking, adjusts prediction formula 30 into prediction formula 34 in which less pressure is applied to the foot than prediction formula 30, as shown in Fig. 11. Furthermore, for example, if footwear 40 for soccer is preferred to have tight design, design assist apparatus 1, when it receives application data that it is for soccer, adjusts prediction formula 30 into prediction formula 35 in which more pressure is applied to the foot than prediction formula 30, as shown in Fig. 11. Moreover, for footwear 40 for soccer, it is necessary to consider switching actions to left and right in addition to running in one direction (running straight). Thus, design assist apparatus 1 may add a prediction formula for the switching actions, in addition to the prediction formula for direct use. Furthermore, regarding footwear 40 for running, if travel distance per time is long and support is required, design assist apparatus 1 adjusts the prediction formula so that the pressure generated on the inner side of the midfoot portion is increased. If the travel distance per time is short, design assist apparatus 1 adjusts the prediction formula that the fitting pressure of the instep is increased.

Next, while design assist apparatus 1 can adjust prediction formula 30 by feeding back the user evaluation regarding fit, design assist apparatus 1 is unable to adjust prediction formula 30 to such an extent that footwear 40 does not function as footwear 40. For example, even if the user's preference is tighter, increasing the pressure applied to the foot to an extent of hindering blood circulation of the foot has a safety problem. Conversely, even if the user's preference is looser, lowering the pressure applied to the foot to an extent that stable running is impossible has a safety problem. Hence, design assist apparatus 1 may adjust prediction formula 30, based on safety standards.

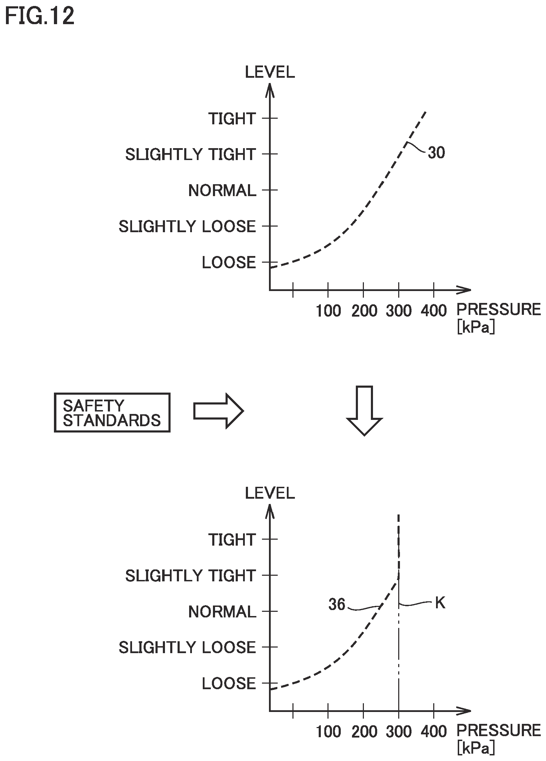

Fig. 12 is a diagram for illustrating an example of adjusting the prediction formula based on safety standards. For example, if the user's preference is tighter and the pressure applied to the foot is extremely high, design assist apparatus 1 adjusts prediction formula 30 into prediction formula 36 so that the pressure falls within the range of safety standard K (e.g., 300 kPa or less).

### [Other Variations]

Design assist apparatus 1 may be installed in a store or may exist as a server apparatus on a cloud. Further, design assist apparatus 1 existing as a server apparatus on a cloud may be communicatively connected to terminal apparatuses installed in respective stores, and determine the pressure data 20 indicative of pressure applied to a foot in a region of footwear 40 from a received level of fit of the region, based on prediction formula 30 from a terminal apparatus 2.

In the above-described embodiment, prediction formula 30 is used to determine the fitting pressure or foot pressure from a level of fit. However, to determine foot pressure, the functionality of footwear may be cushioning property or supportive property, instead of fit. In other words, design assist apparatus 1 determines a prediction formula between levels of cushioning property or supportive property and the foot pressure, and adjusts the prediction formula according to a user. Design assist apparatus 1 can design or propose footwear having cushioning property or supportive property that is satisfactory to a user by determining foot pressure matching a level of user's preferred cushioning property or supportive property from the adjusted prediction formula. When determining the prediction formula between the level of cushioning property and the foot pressure, the foot pressure is substituted with a value of widening a range where the pressure is applied (pressure distribution). When determining a prediction formula between the level of supportive property and the foot pressure, the foot pressure is substituted with a value of pressure to the inner side of the midfoot portion.

### [Aspects]

(1) A design assist apparatus according to the present disclosure is a design assist apparatus for designing footwear having a user's preferred fit, wherein a preferred fit can be set for at least one region of footwear from a plurality of levels, the apparatus including: an input unit that receives, from a plurality of users, level data of fit evaluated by each user for each region and pressure data indicative of pressure applied to a foot for each region when the footwear is worn; a calculation unit that generates a relationship between a level of fit and pressure applied to a foot at the level as a prediction formula for each region, based on the level data and the pressure data received from the plurality of users; a storage unit that stores the prediction formula generated by the calculation unit; and an output unit that outputs pressure data indicative of pressure applied to a foot, wherein the calculation unit, when the input unit newly receives a level of fit from a user, determines pressure data indicative of pressure applied to a foot in a region of footwear from the received level of fit of the region, based on the prediction formula.
   With this, the design assist apparatus determines the pressure applied to the foot in a region of footwear from the set level of fit of the region based on the prediction formula, thereby designing or proposing footwear having fit that is satisfactory to the user.
(2) The design assist apparatus described in (1), wherein when the input unit receives the level data of footwear from a specific user and the level data is different from a level of fit set for footwear, the calculation unit adjusts the prediction formula based on the received level data and the pressure data of footwear and stores the adjusted prediction formula into the storage unit as a prediction formula for the specific user.
   With this, the design assist apparatus can generate the prediction formula for the specific user, thereby designing or proposing footwear having fit that is more satisfactory to the specific user.
(3) The design assist apparatus described in (1) or (2), wherein the level data is image data including a region indicated by a user and level information of fit of the region.
   With this, the user can easily generate and enter level data to the design assist apparatus.
(4) The design assist apparatus described in any one of (1) to (3), wherein the pressure data includes values of pressure applied to a foot for each region determined by simulation based on user's foot shape data and footwear design data.
   With this, the pressure data can be generated and input to the design assist apparatus, without having to actually measure the pressure applied to the foot.
(5) The design assist apparatus described in any one of (1) to (3), wherein the pressure data includes values of pressure applied to a foot for each region measured by a sensor provided on footwear.
   With this, the pressure applied to the foot can be actually measured, and pressure data can be generated based on measured values and input to the design assist apparatus.
(6) The design assist apparatus described in any one of (1) to (5), wherein regions of footwear for which a level of fit is set at least include at least one region among a toe region, a metatarso phalangeal region, an instep region, and a heel region.
   With this, the design assist apparatus can design or propose footwear having fit that is satisfactory to the user for at least one region among the toe region, the MP region, the instep region, and the heel region.
(7) The design assist apparatus described in any one of (1) to (6), wherein the input unit further receives usage data regarding use of footwear, and the calculation unit adjusts the prediction formula based on the usage data and stores the adjusted prediction formula into the storage unit as a prediction formula for the usage data.
   With this, the design assist apparatus can adjust the prediction formula in consideration of the usage data.
(8) The design assist apparatus described in any one of (1) to (7), wherein the input unit further receives application data regarding application of footwear, and the calculation unit adjusts the prediction formula based on the application data and stores the adjusted prediction formula into the storage unit as a prediction formula for the application data.
   With this, the design assist apparatus can adjust the prediction formula in consideration of the application data.
(9) The design assist apparatus described in any one of (1) to (8), wherein the storage unit pre-stores safety standards for safe use of footwear, and the calculation unit adjusts the prediction formula based on the safety standards.
   With this, the design assist apparatus can adjust the prediction formula in consideration of the safety standards.
(10) A design assist method according to the present disclosure is a design assist method for designing footwear having a user's preferred fit, wherein a preferred fit can be set for at least one region of footwear from a plurality of levels, the method including: receiving, from a plurality of users, level data including a level of fit set for each region and pressure data indicative of pressure applied to a foot for each region when footwear having a level of fit set for each region is worn; generating a relationship between a set level of fit and pressure applied to a foot at the level as a prediction formula for each region, based on the level data and the pressure data received from the plurality of users; storing the generated prediction formula; determining, when newly receiving a level of fit from a user, pressure data indicative of pressure applied to a foot in a region of footwear from the received level of fit of the region, based on the prediction formula; and outputting determined pressure data indicative of pressure applied to a foot.
   With this, the design assist method determines the pressure applied to the foot in a region of footwear from the set level of fit of the region based on the prediction formula, thereby designing or proposing footwear having fit that is satisfactory to the user.
(11) A program according to the present disclosure is a program, executed by a computer, for designing footwear having a user's preferred fit, wherein a preferred fit can be set for at least one region of footwear from a plurality of levels, causing the computer to implement: an input unit that receives, from a plurality of users, level data including a level of fit set for each region and pressure data indicative of pressure applied to a foot each region when footwear having a level of fit set for each region is worn; a calculation unit that generates a relationship between a set level of fit and pressure applied to a foot at the level as a prediction formula for each region, based on the level data and the pressure data received from the plurality of users and stores the generated prediction formula into a storage unit; and an output unit that, when the input unit newly receives a level of fit from a user, outputs pressure data indicative of pressure applied to a foot in a region of footwear determined by the calculation unit from the received level of fit of the region, based on the prediction formula.

With this, since the program determines the pressure applied to the foot in a region of footwear from the set level of fit of the region based on the prediction formula, thereby designing or proposing footwear having fit that is satisfactory to the user.

The presently disclosed embodiments should be considered in all aspects as illustrative and not restrictive. The scope of the invention is defined by the appended claims, rather than by the above description. All changes which come within the meaning and range of equivalency of the appended claims are to be embraced within their scope.

### REFERENCE SIGNS LIST

1 design assist apparatus; 10 level data; 11 processor; 12 memory; 13 storage; 14 interface; 15 media reader; 16 communication device; 17 processor bus; 18 storage medium; 20 pressure data; 30-36 prediction formula; 40 footwear; 50 upper; 60 sole; 70 foot shape data; 130 design program; 131 prediction program; and 132 OS.

## Claims

1. A design assist apparatus for designing footwear having a user's preferred fit, wherein
a preferred fit can be set for at least one region of footwear from a plurality of levels, the design assist apparatus including:
an input unit that receives, from a plurality of users, level data of fit evaluated by each user for each region and pressure data indicative of pressure applied to a foot for each region when the footwear is worn;
a calculation unit that generates a relationship between a level of fit and pressure applied to a foot at the level as a prediction formula for each region, based on the level data and the pressure data received from the plurality of users;
a storage unit that stores the prediction formula generated by the calculation unit; and
an output unit that outputs pressure data indicative of pressure applied to a foot, wherein
the calculation unit, when the input unit newly receives a level of fit from a user, determines pressure data indicative of pressure applied to a foot in a region of footwear from the received level of fit of the region, based on the prediction formula.

2. The design assist apparatus according to claim 1, wherein
when the input unit receives the level data of footwear from a specific user and the level data is different from a level of fit set for footwear, the calculation unit adjusts the prediction formula based on the received level data and the pressure data of footwear and stores the adjusted prediction formula into the storage unit as a prediction formula for the specific user.

3. The design assist apparatus according to claim 1 or claim 2, wherein
the level data is image data including a region indicated by a user and level information of fit of the region.

4. The design assist apparatus according to any one of claims 1 to 3, wherein
the pressure data includes values of pressure applied to a foot for each region determined by simulation based on user's foot shape data and footwear design data.

5. The design assist apparatus according to any one of claims 1 to 3, wherein
the pressure data includes values of pressure applied to a foot for each region measured by a sensor provided on footwear.

6. The design assist apparatus according to any one of claims 1 to 5, wherein
regions of footwear for which a level of fit is set at least include at least one region among a toe region, a metatarso phalangeal region, an instep region, and a heel region.

7. The design assist apparatus according to any one of claims 1 to 6, wherein
the input unit further receives usage data regarding use of footwear, and
the calculation unit adjusts the prediction formula based on the usage data and stores the adjusted prediction formula into the storage unit as a prediction formula for the usage data.

8. The design assist apparatus according to any one of claims 1 to 7, wherein
the input unit further receives application data regarding application of footwear, and
the calculation unit adjusts the prediction formula based on the application data and stores the adjusted prediction formula into the storage unit as a prediction formula for the application data.

9. The design assist apparatus according to any one of claims 1 to 8, wherein
the storage unit pre-stores safety standards for safe use of footwear, and
the calculation unit adjusts the prediction formula based on the safety standards.

10. A design assist method for designing footwear having a user's preferred fit, wherein
a preferred fit can be set for at least one region of footwear from a plurality of levels, the design assist method comprising:
receiving, from a plurality of users, level data including a level of fit set for each region and pressure data indicative of pressure applied to a foot for each region when footwear having a level of fit set for each region is worn;
generating a relationship between a set level of fit and pressure applied to a foot at the level as a prediction formula for each region, based on the level data and the pressure data received from the plurality of users;
storing the generated prediction formula;
determining, when newly receiving a level of fit from a user, pressure data indicative of pressure applied to a foot in a region of footwear from the received level of fit of the region, based on the prediction formula; and
outputting determined pressure data indicative of pressure applied to a foot.

11. A program, executed by a computer, for designing footwear having a user's preferred fit, wherein
a preferred fit can be set for at least one region of footwear from a plurality of levels, causing the computer to implement:
an input unit that receives, from a plurality of users, level data including a level of fit set for each region and pressure data indicative of pressure applied to a foot for each region when footwear having a level of fit set for each region is worn;
a calculation unit that
generates a relationship between a set level of fit and pressure applied to a foot at the level as a prediction formula for each region, based on the level data and the pressure data received from the plurality of users and
stores the generated prediction formula into a storage unit; and
an output unit that, when the input unit newly receives a level of fit from a user, outputs pressure data indicative of pressure applied to a foot in a region of footwear determined by the calculation unit from the received level of fit of the region, based on the prediction formula.

12. A storage medium storing a program, executed by a computer, for designing footwear having a user's preferred fit, wherein
a preferred fit can be set for at least one region of footwear from a plurality of levels, causing the computer to implement:
an input unit that receives, from a plurality of users, level data including a level of fit set for each region and pressure data indicative of pressure applied to a foot for each region when footwear having a level of fit set for each region is worn;
a calculation unit that
generates a relationship between a set level of fit and pressure applied to a foot at the level as a prediction formula for each region, based on the level data and the pressure data received from the plurality of users and
stores the generated prediction formula into a storage unit; and
an output unit that, when the input unit newly receives a level of fit from a user, outputs pressure data indicative of pressure applied to a foot in a region of footwear determined by the calculation unit from the received level of fit of the region, based on the prediction formula.
